# EUROPÄISCHE PATENTSCHRIFT

(11) **EP 2 212 035 B1**
(45) Veröffentlichungstag und Bekanntmachung des Hinweises auf die Patenterteilung: **12.06.2013**
(21) Anmeldenummer: 08838977.0
(22) Anmeldetag: 09.10.2008
(51) Int. Cl.: B07C 5/342

(54) **VORRICHTUNG UND VERFAHREN ZUR KLASSIFIKATION TRANSPARENTER BESTANDTEILE IN EINEM MATERIALSTROM**
DEVICE AND METHOD FOR THE CLASSIFICATION OF TRANSPARENT COMPONENTS IN A MATERIAL FLOW
DISPOSITIF ET PROCÉDÉ DE CLASSIFICATION DE CONSTITUANTS TRANSPARENTS DANS UN FLUX DE MATIÈRES

(30) Priorität: 16.10.2007 DE 202007014466 U
(43) Veröffentlichungstag der Anmeldung: 04.08.2010
(73) Patentinhaber: Fraunhofer-Gesellschaft zur Förderung der angewandten Forschung e.V., 80686 München (DE)
(72) Erfinder: HARTRUMPF, Matthias, 76187 Karlsruhe (DE); HEINTZ, Rüdiger, 76777 Neupotz (DE)
(74) Vertreter: Rösler, Uwe
(86) Internationale Anmeldenummer: PCT/DE2008/001662
(87) Internationale Veröffentlichungsnummer: WO 2009/049594

(56) Entgegenhaltungen:
- US-A1- 2006 016 735

## Beschreibung

### Technisches Gebiet

Die Erfindung bezieht sich auf eine Vorrichtung sowie ein Verfahren zur Klassifikation transparenter Bestandteile eines Materialstromes. Die Vorrichutng besteht aus einer optischen Detektoreinrichtung, deren zuordenbare optische Achse auf den Materialstrom gerichtet ist und wenigstens zwei Einrichtungen zur Beleuchtung des Materialstromes. Die wenigstens zwei Beleuchtungseinrichtungen und die Detektoreinheit befinden sich relativ zum Materialstrom auf der gleichen Seite, d. h. im gleichen über dem Materialstrom aufgespannten Halbraum. Die Informationen, welche die Detektoreinrichtung von den Bestandteilen des Materialstromes aufnimmt, werden in einer Einheit, die einen Klassifikator aufweist ausgewertet. Basierend auf dem Ergebnis der Klassifikation werden Steuersignale für eine Einheit zur Sortierung, bspw. mittels Aktoren, wie z. B. Ausblasdüsen oder Sortierweichen, oder Markierung oder Protokollierung generiert. Der Materialstrom kann in Form von geschütteten Einzelobjekten, bspw. in Form von Schüttgütern, oder als kontinuierlich produziertes zusammenhängendes Material, z. B. Flachglas oder extrudiertes teiltransparentes Material, vorliegen.

### Stand der Technik

Bei an sich bekannten Anlagen zur automatisch optischen Sortierung von Schüttgütern wird das zu sortierende Material in möglichst einlagiger Schicht auf ein Förderband aufgebracht, durch einen Fallschacht geleitet oder über eine Rutsche geschüttet. Sofern ein Förderband verwendet wird, läuft dieses mit einer Geschwindigkeit von z. B. 3 m/s. Am Ende des Förderbandes wird das Material vom Förderband abgeworfen und fliegt in einer Wurfparabel weiter. Kurz nach der Abwurfkante inspiziert ein Bildverarbeitungssystem den Materialstrom. Die von der Kamera aufgenommenen Bilder werden von einem Rechner ausgewertet. Die Bestandteile des Schüttgutstromes, die es auszusortieren gilt, werden anhand ihrer Farbe und ggf. auch ihrer Form erkannt und mit Hilfe von kurzen Druckluftstößen aus dem freifliegenden Materialstrom regelrecht ausgeblasen.

In anderen Realisierungsformen von optischen Sortierern wird der frei fliegende Materialstrom nicht über ein Förderband erzeugt, sondern der Schüttgutstrom rutscht über eine Rutsche oder der Schüttgutstrom wird regelrecht in Form eines frei fallenden Materialstromes geschüttet. Beispielsweise wird hierzu auf die EP 0 146 299 B1 verwiesen, in der ein Kanalsortierer beschrieben ist, bei dem bspw. ein aus Kaffeebohnen bestehender Schüttgutstrom durch eine Messzelle hindurch fällt, in der einerseits ein beleuchteter Hintergrund und andererseits ein durch diskrete Fotosensoren aufgebauter Detektor vorgesehen sind. Der Schüttgutstrom fällt hierbei senkrecht durch die Betrachtungszone, die von dem Detektor mit Blickrichtung auf den Hintergrund gebildet wird. Eine der Messzelle in Fallrichtung des Schüttgutstromes nachfolgende Hochdruckdüseneinrichtung selektiert Fehlteile aus dem Schüttgutstrom. Der dieser Art von Sortierer zugrunde liegende Mechanismus zur Detektion von Fehlteilen basiert auf der messtechnischen Erfassung der Andersfarbigkeit der Fehlteile im Unterschied zu den Bestandteilen des übrigen Schüttgutstromes.

Wichtige Details bei der Auslegung derartiger optischer Sortiereinrichtungen für transparente Objekte ist vor allem die Detektion der optischen Transparenz. Insbesondere bei Schüttgütern wird diese Detektion erschwert durch die meist regellose Lage der transparenten Objekte im Materialstrom und die oft unregelmäßige Objektgeometrie.

Selbst bei reinen Stoffen ist die Transmission des Stoffes allein nur dann ein Indiz für die Materialart, wenn sowohl Objektform als auch Dicke und Lage bekannt sind.

Beispielsweise kommt es bei der Inspektion von Schüttgütern - z.B. transparenten Kunststoffgranulaten - im Durchlicht bereits durch die zumindest relativ undefinierte Lage und die Geometrie der Objekte zu starken Variationen der transmittierten Strahlung. Selbst bei der Inspektion transparenter Kugeln im Durchlicht erhält man lediglich einen runden Inspektionsbereich, dessen Grenzen von der Systemdimensionierung und Kugelgröße abhängen. Nur in diesem Bereich könnten mit einer Durchlichtanordnung Störungen detektiert werden. Kratzer, Fremdpartikel, Trübungen der Objektoberfläche führen dort allerdings lediglich zu einer zusätzlichen Schwächung der transmittierten Strahlung. Auf Basis der in einer Durchlichtanordnung ermittelten Transmission von Schüttgütern ist daher eine entsprechende Klassifikation nicht bzw. kaum möglich.

Die US 2006/0016735 A1 beschreibt einen Sortierer für transparente Granulate, die von einem Bandförderer längs einer Wurfparabel durch zwei längs der Wurfparabel angeordnete Detektoreinheiten fallen, von denen eine die Vorderseite der Granulate und die andere die Rückseite der Granulate mit jeweils einer Kamera und einem der Kamera zugeordneten Hintergrund aufnehmen. Durch Vergleich von Vorder- und Rückseitenaufnahme kann auf die Transparenz der Bestandteile geschlossen und unter Zugrundelegung eines Kriteriums können Fehlteile mittels einer Luftdruckdüse ausgesondert werden. Die Kamerabilder erfassen in dieser Anordnung ausschließlich an den Granulatoberflächen reflektierte Lichtanteile, so dass eine Erfassung von in den Granulaten eingeschlossenen Fehlstellen nicht möglich ist.

Die US 5,442,446 beschreibt eine Vorrichtung zur Untersuchung transparenter Behältnisse, insbesondere hinsichtlich ihres Füllgrades, die eine Lichtquelle vorsieht, deren Licht koaxial in Blickrichtung eines Detektors durch ein zu untersuchendes Behältnis hindurchtritt, an einem rückwärtig zum Behältnis angeordneten Retroreflektor reflektiert und vom Detektor erfasst wird. Zusätzlich sind zwei weitere Lichtquellen rückwärtig zum Behältnis vorgesehen, deren emittierte Lichtstrahlen das Behältnis in Transmission durchsetzen und gleichfalls vom Detektor erfasst werden.

Die EP 0 379 281 beschreibt eine Vorrichtung zur Untersuchung von Gewebestrukturen, wobei hierfür Licht einer Lichtquelle über einen entsprechenden Umlenkspiegel auf die Oberfläche eines zu untersuchenden Gewebesubstrats gerichtet wird, unter dem ein Retroreflektor vorgesehen ist. Auch in diesem Falle werden die in sich zurück reflektierten Lichtstrahlen von einer Detektoreinheit erfasst.

Die EP 0 372 241 B1 beschreibt eine Optikanordnung zur dreidimensionalen Formerfassung, mit der insbesondere Unebenheiten einer transparenten Folie erfasst werden können. Licht einer Lichtquelle tritt in Transmission durch die Folie und wird an einem in Strahlrichtung hinter der Folie angebrachten Retroreflektor reflektiert. Der reflektierte Lichtanteil wird zur weiteren Auswertung von einer Videokamera erfasst.

### Darstellung der Erfindung

Ziel einer erfindungsgemäßen Vorrichtung ist es die Transmission transparenter Bestandteile eines Materialstroms in weiten Grenzen unabhängig von der Lage und Form der Objekte zu bestimmen und die Objekte je nach gestellter Prüfaufgabe und Objektart nach wenigstens einem der nachfolgenden Kriterien zu klassifizieren:
- Transparenz
- Material- bzw. Materialart,
- geometrische Formstörungen,
- Defekte, wie eingeschlossene Luftblase oder Kratzer oder Brüche,
- eingelagerte Fremdkörper, z.B. absorbierende Fremdkörper,
- Oberflächendefekt oder Verunreinigung auf der Oberfläche.

Ferner soll ein Verfahren angegeben werden mit dem eine Klassifizierung auf möglichst einfache und sichere Weise realisierbar ist.

Die Lösung der Aufgabe ist in den Ansprüchen 1 und 2 angegeben. Den Erfindungsgedanken vorteilhaft weiterbildende Merkmale sind den abhängigen Ansprüchen sowie der nachfolgenden Beschreibung insbesondere unter Bezugnahme auf die Ausführungsbeispiele zu entnehmen. Bevorzugte Verwendungen der Vorrichtung sind Gegenstand der Ansprüche 11 und 12. Gegenstand der Ansprüche 13 ff. ist ein lösungemäßes Verfahren.

Lösungsgemäß zeichnet sich eine Vorrichtung zur Klassifikation transparenter Bestandteile eines Materialstromes anhand ihrer Transparenz und weiterer objektspezifischer optischer Eigenschaften mit den Merkmalen des Oberbegriffes des Anspruchs 1 dadurch aus, dass zumindest längs der optischen Achse der optischen Detektoreinrichtung, in Detektorblickrichtung dem Materialstrom mittel- oder unmittelbar nachgeordnet ein Retroreflektor vorgesehen ist, dass die Beleuchtungseinrichtung wenigstens zwei Lichtquellen vorsieht, von denen die erste Lichtquelle Licht einer ersten und die zweite Lichtquelle Licht einer zweiten Art emittiert, dass das Licht wenigstens der ersten Lichtquelle längs zur optischen Achse auf den Materialstrom trifft und dass die optische Detektoreinrichtung das Licht beider Lichtquellen selektiv zu detektieren vermag. In einer ersten alternativen Lösungsvariante beleuchtet das Licht der zweiten Lichtquelle in Form einer Auflichtquelle den Materialstrom, d.h. das Licht fällt flächig verteilt und nicht längs der optischen Achse der Detektoreinrichtung auf den Materialstrom. In einer zweiten alternativen Lösungsvariante trifft hingegen das Licht der zweiten Lichtquelle längs zur optischen Achse auf den Materialstrom.

In einer ersten vorteilhaften Ausführungsform werden die Bestandteile des Materialstromes so nah wie möglich über einen flächigen Retroreflektor, z. B. in Art einer Retroreflexfolie oder eines Array aus Glaskugeln oder Mikroprismen, geführt, wobei die Blickrichtung der optischen Derektoreinheit, die vorzugsweise als Kamera ausgebildet ist, auf ein Bestandteil im Materialstrom und den dahinter befindlichen Reflektor gerichtet ist. In den Strahlengang der Kamera in Richtung zum Bestandteil des Materialstromes wird ein Beleuchtungsstrahlengang eingespiegelt, der mit der optischen Achse der Kameraeinheit zusammenfällt. Auf diese Weise können mit der Kameraeinheit Aufnahmen an ebenen transparenten Bestandteilen, z.B. an Glasscheiben, gewonnen werden, die den Aufnahmen mit einer so genannten Durchlichtanordnung entsprechen. Da die Lichtstrahlen die jeweils transparenten Bestandteile, bedingt durch den Retroreflektor, zweifach durchsetzen, können Änderungen der Transmission der zu untersuchenden Bestandteile mit entsprechend höherem Kontrast mit der Kameraeinheit beobachtet werden.

Für Bestandteile, die keine ebenen Oberflächen aufweisen, werden zusätzlich alle Strahlengänge, die auf den Retroreflektor auftreffen, praktisch ohne Versatz in sich zurückreflektiert und erreichen ebenfalls wieder die Kamera. Im vorstehend angeführten Beispiel kugelförmiger Objekte kann man mit dieser Anordnung eine nahezu vollständige Ausleuchtung der Kugel bewirken. In den Abbildungen hinreichend transparenter Kugeln sind praktisch nur noch die Außenkanten der Kugeln sichtbar. Entsprechende Vorteile erhält man auch für alle anders geformten transparenten Objekte.

Durch die lösungsgemäße zusätzliche Auflichtbeleuchtung der Bestandteile können Unterschiede zwischen streuenden Teilen und absorbierenden Partikel, z. B. Fremdpartikeln in den Bestandteilen sichtbar gemacht werden. In Kombination mit den Ergebnissen aus der Auswertung des Retroreflex-Strahlengangs ist somit eine weitere Klassifikation der beobachteten Störungen möglich.

Werden die Bestandteile im Materialstrom gemäß der zweiten angegebenen Lösungsalternative mit Licht aus wenigstens zwei unterschiedlichen Bereichen des elektromagnetischen Spektrums durchstrahlt, d.h. Licht einer ersten und einer zweiten Lichtquelle wird jeweils längs der optischen Achse der optischen Detektoreinheit eingespiegelt, so kann aus dem Vergleich der Transmissionen in den unterschiedlichen Spektralbereichen das Material bzw. die Materialart ermittelt werden. Bei den unterschiedlichen Bereichen des elektromagnetischen Spektrums handelt es sich um den UV-A-, den UV-B-, den UV-C-, den Röntgen- oder Gammastrahlenbereich, den sichtbaren Bereich des Spektrums (VIS), den nahen (NIR)-, mittleren (MIR)- oder fernen (FIR) Infrarotbereich oder den Bereich der Terrahertzwellen.

Ein Beispiel für eine Kombination aus zwei unterschiedlichen Bereichen ist eine Kombination des UV-C und dem sichtbaren Spektralbereich. Mit einer solchen Kombination ist es beispielsweise möglich - basierend auf einem Vergleich der Transmissionen im sichtbaren und im UV-C - Diamanten von Quarz zu unterscheiden. Dies kann mit einem sehr einfachen Verfahren erfolgen, indem für jeden Bestandteil der Quotient der Transmissionen im UV-C und im sichtbaren Bereich des Spektrums gebildet wird und die so erhaltenen relativen Transmissionen mit einer festen Schwelle, bzw. Sollwert, verglichen werden.

Ein auf der Verwendung der vorstehenden Vorrichtung basierendes Verfahren zur Klassifizierung von Bestandteilen innerhalb eines Materialstromes sei nachstehend erläutert.

Innerhalb eines Materialstromes enthaltende Bestandteile werden mit Hilfe einer Detektoreinheit optisch erfasst, wodurch Detektordaten, in Form von Bilddaten, entstehen, die es im Weiteren gilt einer Bilddatenauswertung zu unterziehen. In Abhängigkeit der jeweils zu klassifizierenden Bestandteile wird ein das jeweils zu klassifizierende Bestandteil theoretisch beschreibendes Texturmodell erstellt, das jeweilige Bestandteile innerhalb des Materialstromes nach Form, Größen und deren optische Eigenschaften zumindest in grober Annäherung zu beschreiben vermag. Das Texturmodell enthält jedoch näher zu spezifizierende Parameter, durch deren Festlegung ein virtuelles Referenzmuster, ein so genanntes Elementarmuster, gebildet wird.

Zur Bestimmung der Texturmodell-Parameter werden die Detektordaten, d.h. jene Bilddaten, die die Detektoreinrichtung von einem zu klassifizierenden Materialstrom generiert, einer Merkmalsextraktion unterzogen, anhand der die das Texturmodell näher bestimmende Parameter bestimmt werden können. Im Rahmen der Merkmalsextraktion werden die Detektor- bzw. Bilddaten nach durch das Texturmodell vorgegebenen Mustern und/oder optisch wahrnehmbaren Besonderheiten untersucht, durch deren Auswertung und/oder entsprechender Skalierung konkrete, das Texturmodell näher bestimmende Parameter abgeleitet werden. Darüber hinaus lassen sich aus der Merkmalsextraktion für sämtliche Bilddaten geltende Parameter ableiten, die so genannten globalen Parameter, wie beispielsweise der räumliche Betrachtungswinkel, unter dem die Detektoreinrichtung den Materialstroms erfasst oder die Beleuchtungsverhältnisse etc.

Nach Bestimmung der die Bestandteile näher beschreibenden Parameter sowie auch der für alle Bestandteile innerhalb des Materialstroms geltenden globalen Parameter ergibt sich das parametrisierte Texturmodell mit einer zu erwartenden Textur, das bedeutet, dass sowohl Form und Größe jedes von einem Elementarmuster ableitbaren Einzelmusters sowie dessen optische Eigenschaften bekannt sind. Ferner kann auf der Grundlage eines aus dem parametrisierten Texturmodell abgeleiteten Anordnungsschema die Position sämtlicher Einzelmuster innerhalb des Materialstromes bestimmt werden.

Durch Vergleich der mit Hilfe des parametrisierten Texturmodells aus den Bilddaten der Detektoreinrichtung selektierbaren und lokalisierbaren Einzelmuster mit dem ebenfalls aus dem Texturmodell ableitbaren Elementarmuster, das als Referenzmuster dient, lassen sich Abweichungen, im Sinne von möglichen Defekten, erkennen.

Anhand einer positionsabhängigen Klassifikation erfolgt für jede Position eines innerhalb des Bilddatensatzes befindlichen Einzelmusters eine entsprechende Klassenzuordnung, d.h. detektierte Einzelmuster, die im Bildmittenbereich der seitens der Detektoreinrichtung gewonnenen Bildes liegen, unterliegen weit geringeren Störeinflüssen, bedingt durch Abschattungen, Bildrandverzerrungen etc., als jene Einzelmuster, die im Bildrandbereich liegen, so dass für die im Bildmittenbereich detektierten Einzelmuster schärfere Klassifikationskriterien gelten, als für jene im Bildrandbereich.

Zudem ist es möglich Abweichungen selbst innerhalb eines Einzelmusters von einem vorgegebenen Elementarmuster einer positionsabhängigen Klassifikation zu unterziehen, um so bspw. systembedingte Detektionsungenauigkeiten, die von den Beleuchtungs- und Sichtverhältnissen am Ort eines zu inspizierenden Elementarmusters abhängen, bei der Klassifikation weitgehend zu berücksichtigen. So können auf diese Weise formbedingte Abschattungseffekte an einem Bestandteil berücksichtigt werden.

Darüber hinaus können in den Elementarmuster detektierte Fehler, falls sie in Bereichen des Elementarmusters liegen, die für eine spätere Verwendung des detektierten Bestandteils unkritisch sind, akzeptiert werden. Betreffen die zu prüfenden Bestandteile bspw. optische Linsen, die als Endprodukt in einer Fassung ausgeliefert werden, so können randnahe Fehler innerhalb der jeweiligen Linse, die ohnehin von der Fassung überdeckt werden, akzeptiert werden.

Letztlich ermöglicht eine Aktorik im Anschluss an die Klassifikation eine Trennung der als Ausschuss- oder Fehlteile klassifizierten Bestandteile aus dem Materialstrom.

Dem vorstehend beschriebenen Verfahren liegt die Vorgabe eines Texturmodells zugrunde, in dem die Form und das Material und damit verbunden die optischen Eigenschaften eines zu klassifizierenden Bestandteiles innerhalb des Materialstroms in der folgenden Weise Berücksichtigung findet: Auf der Grundlage einer bekannten Objektform sowie bekannten optischen Eigenschaften eines zu klassifizierenden Bestandteiles, wird ein virtuelles Reinmodell des jeweiligen Bestandteiles generiert. Das Reinmodell wird im Anschluss daran in ein Objektmodell überführt, das als Grundlage für die betrachtete Inspektionsaufgabe bzw. Klassifikation eingesetzt wird. In das Objektmodell fließen, sofern vorhanden, das Reinmodell beeinflussende Prozessstörungen ein, die im Rahmen eines Störungsmodells beschrieben werden können. Andernfalls genügt oft eine hinreichend genaue Kenntnis der zu selektierenden oder zu markierenden Fraktion aus dem Materialstrom.

Unter weiterer Berücksichtigung bekannter Parameter, die das optische Inspektionssystem, d.h. die Beleuchtungs- und Bildaufnahmeeigenschaften der Detektoreinrichtung beschreiben, folgt aus dem Objektmodell ein Szenenmodell, auf dessen Grundlage letztlich durch Prädiktion der mit der Detektoreinrichtung aufgenommenen Bilddaten ein parametrisierbares Texturmodell definiert werden kann.

Das Texturmodell setzt sich aus wenigstens einem Elementarmuster sowie einem Anordnungsschema zusammen, gemäß dem das Elementarmuster in Position und Lage angeordnet sein kann. Das Elementarmuster entspricht dabei dem idealen Einzelmuster eines zu klassifizierenden Bestandteils. Grundsätzlich können das Elementarmuster und das Anordnungsschema stochastische Variationen aufweisen. Je nach Stärke der Variationen können folgende Fälle unterschieden werden:
1. Struktureller Strukturtyp, d.h. es treten keinerlei stochastische Variationen auf.
2. Strukturell-statistischer Strukturtyp, d.h. zwar treten stochastische Variationen auf, doch können Elementarmuster erkannt werden.
3. Statistischer Texturtyp, d.h. es treten stochastische Variationen in dem Maße auf, bei dem Elementarmuster nicht mehr erkannt werden können.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Darstellung einer Vorrichtung zur optischen Erkennung von Fremdpartikeln in (teil-)transparenten Bestandteilen eines Materialstroms und
- Fig. 2: schematisierte Darstellung einer Vorrichtung zur optischen Erkennung der Materialart von (teil-) transparenten Bestandteilen eines Materialstroms.

### Wege zur Ausführung der Erfindung, Gewerbliche Anwendbarkeit

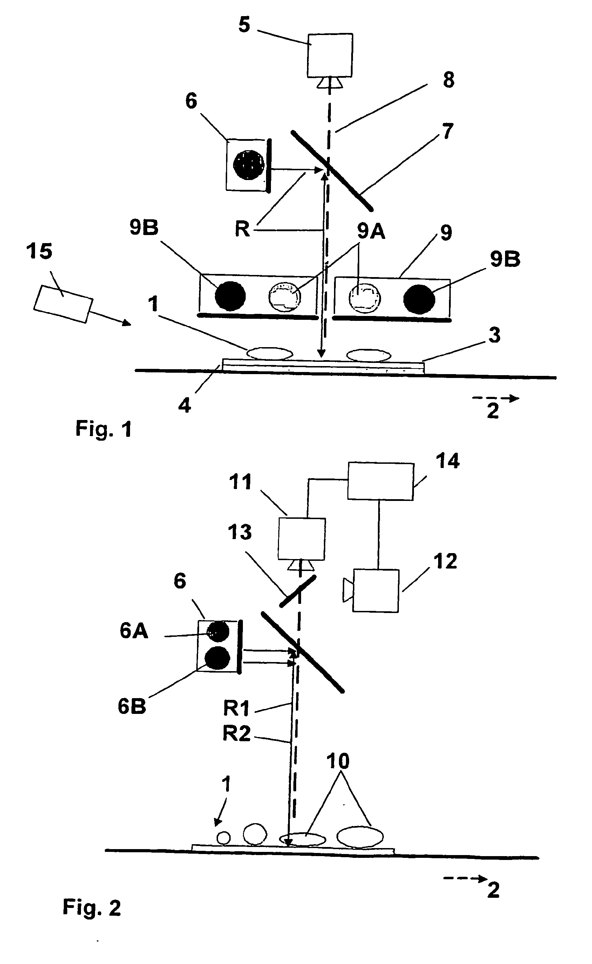

Figur 1 zeigt den schematischen Aufbau einer Vorrichtung zur Erkennung von Fremdpartikeln in (teil-) transparenten Bestandteilen 1 eines Materialstroms. Im gezeigten Beispiel handelt es sich bei den Bestandteilen 1 um linsenförmige Objekte, die in einem Extruder produziert werden und unter der Vorrichtung längs der Förderrichtung 2 gefördert werden. Unter den Objekten 1 befindet sich eine satinierte Glasscheibe 3, die einerseits eine Berührung der Objekte 1 mit der Retroreflexfolie 4 verhindert und andererseits dazu führt, dass die mit der Kamera 5 detektierte Strahlung nicht durch die Feinstruktur des Reflektors 4 moduliert wird. Die Beleuchtung 6 mit einer ersten Lichtquelle emittiert Licht für den Retroreflex-Strahlengang R, der über einen teildurchlässigen Spiegel 7 längs der optischen Achse 8 der Kamera 5 eingespiegelt wird.

Die Objekte 1 werden zusätzlich mit einer Auflichtbeleuchtung 9 beleuchtet, die zwei Arten von Lichtquellen, eine zweite und eine dritte Lichtquelle 9A und 9B, vorsieht, die jeweils in unterschiedlichen Spektralbereichen emittieren und darüber hinaus die Objekte 1 bzw. den Retroreflektor 4 aus unterschiedlichen Winkeln beleuchten.

Im gezeigten Beispiel ist die Kamera 5 als RGB-Farbzeilenkamera ausgeführt, die Beleuchtung 6 emittiert rotes, die Beleuchtung 9A grünes und die Beleuchtung 9B blaues Licht. Eine Auswertung erfolgt gemäß einem im Weiteren geschilderten Verfahren.

Grundsätzlich macht sich die vorstehend beschriebene Vorrichtung, mit der eine gleichzeitige Inspektion von zumindest teiltransparenten Bestandteilen sowohl in Durchlichtbetrachtung als auch in der Auflichtbetrachtung möglich ist, folgende Erkenntnis zunutze:
Geometriestörungen zeichnen sich in der Auflichtbetrachtung als helle Bereiche ab und treten in der Durchlichtbetrachtung dunkel in Erscheinung, hingegen zeichnen sich Substanzstörungen, wie bspw. eingeschlossene Fremdpartikel, sowohl in der Auflicht- als auch in der Durchlichtbetrachtung als dunkle Bereiche aus. Durch eine entsprechende Verknüpfung von Aufnahmen in Auflicht- und Durchlicht-Modus kann somit zwischen Fremdpartikeln und Geometriefehlern unterschieden werden.
Hinzukommt, dass durch den Retroreflexstrahlengang unabhängig von der Objektgeometrie die beleuchteten Strahlen stets in den Blickbereich der Kamera fallen, d.h. die Bestandteile sind in weiten Grenzen unabhängig von ihrer Form gleichmäßig ausgeleuchtet. Dabei werden die transparenten Bestandteile sogar zweifach durchleuchtet, sodass sich Transmissionänderungen quadriert darstellen.

Durch optionales Vorsehen einer weiteren Beleuchtungseinrichtung 15, die seitlich über den zu detektierenden Materialstrom angeordnet ist und Licht emittiert, das sich durch wenigstens eine physikalische Eigenschaft, bspw. durch Wellenlänge, Polarisation, Amplituden-, Frequenz- und/oder Puls-Modulation etc., von jenem Licht unterscheidet, das von den vorstehenden ersten drei Lichtquellen 6, 9A, 9B emittiert wird, können auf den einzelnen Objekte 1 oberflächig abgelagerte Verunreinigungen, bspw. in Form von Staub, erkannt werden, die zu Zwecken der Klassifikation als zulässige Verunreinigungen eingestuft werden können.

Durch seitliche Beleuchtung, vorzugsweise angeordnet unter einem flachen Einstrahlwinkel, ergibt sich bei streuenden Oberflächen ein hoher Signalwert in der Kamera 5. Da die Oberfläche der Objekte 1 grundsätzlich kaum zu einer Streuung führt, ergeben sich hohe Kamerasignalwerte nur bei Oberflächenverunreinigungen oder -störungen.

Durch entsprechende Segmentierung der Kamerasignale aus diesem Inspektionskanal (im Folgenden "Staubkanal" genannt), d.h. durch geeigneten selektiven Nachweis der von der zusätzlichen Beleuchtungseinheit 15 stammenden Lichtanteile, lassen sich Staubsegmente gewinnen. Nur Positionen für die im Auflichtkanal und im Retroreflexstrahlenkanal ein Segment und im "Staubkanal" kein Segment vorliegt, sind somit als absorbierende Fremdpartikel zu klassifizieren und führen falls die Gesamtgröße aller Segmente mit dieser Eigenschaft für ein Objekt eine zulässige Schwelle überschreitet zu einer Ausschleusung des jeweiligen Objektes.

Figur 2 zeigt eine Ausführungsform der lösungsgemäßen Vorrichtung, die zur Erkennung der Materialart transparenter Objekte 1 geeignet ist. Als konkretes Unterscheidungsbeispiel sei die Erkennung von Diamanten in einem Güterstrom 10 genannt, der als teildurchlässige Komponenten Quarze und Diamanten enthält. In dieser Anordnung weist die Beleuchtungseinheit 6 zwei Lichtquellen 6A und 6B auf, deren Lichtstrahlen R1, R2 über einen teilreflektierenden Spiegel 7 längs der optischen Achse 8 der Kamera 11 als Retroreflex-Strahlengang eingekoppelt werden. Es sei angenommen, dass die erste Lichtquelle 6A eine Weißlicht-Leuchtstoffröhre für den sichtbaren Spektralbereich ist und die andere Lichtquelle 6B eine UV-C Leuchtstoffröhre.

Als Kamera 11 wird eine VIS-Matrixkamera 11 verwendet. Des Weiteren ist eine UV-C Matrixkamera 12 vorgesehen, die das transmittierte UV-C Licht gespiegelt über einen wellenlängenselektiven Strahlteiler 13 detektiert. Mittels eines Klassifikators 14, an den die Signale beider Kameras 11 und 12 gelangen, wird aus den detektierten Unterschieden der Transmission der Objekte in den beiden Spektralbereichen auf die stofflichen Eigenschaften, d. h. die Substanz der untersuchten Objekte 1 geschlossen.

Im Folgenden sei anhand von vier Beispielen die Funktionsweise der lösungsgemäßen Vorrichtung auf der Grundlage des lösungsgemäßen Auswerteverfahrens näher erläutert:

### 1. Erkennung von Fremdpartikeln in transparenten Feststoffen

Bei dieser Anwendung gilt es absorbierende Fremdpartikel in transparenten Feststoffen zu erkennen, wie bspw. Verunreinigungen in Glasprodukten. Luftblasen und Abweichungen auf der Objektoberfläche ebenso wie Objektverformungen können in diesem Fall als für zulässig angesehen werden und dürfen daher nicht als Fehler erkannt werden.

Der transparente Feststoff setzt sich z.B. aus mehreren miteinander verbundenen Ellipsoiden zusammen. Die Ellipsoide sind darüber hinaus in einer geometrischen Struktur vernetzt. Der Rand der Ellipsoide weist eine verminderte Transmission auf, weshalb sich ein dunkler Rand auf der Detektorabbildung im Retroreflexstrahlenkanal ergibt. Somit entspricht die Abbildung durch die Kamera eines idealen Ellipsoids einem so genannten Elementarmuster. Da sich Prozessstörungen, die zu Objektverformungen führen, über einen längeren Zeitraum hinweg entwickeln, kann für jeden Auswertebereich der Detektordaten von einem so genannten strukturellen Texturtyp ausgegangen werden.

Mittels eines globalen Ansatzes lassen sich anhand der Detektordatenmerkmale die Parameter des Texturmodells bestimmen. Parameter sind zum Beispiel die Länge der Halbachsen des Elementarmusters und die Parameter der geometrischen Struktur des Anordnungsschemas sowie die Helligkeit des Elementarmusters. Anhand der Parameter des Anordnungsschemas sind die Einzelmuster lokalisierbar. Absorbierende Partikel werden im Gegensatz zu Luftblasen und Abweichungen auf der Objektoberfläche als dunkle Objekte sowohl im Auflichtkanal als auch im Retroreflexstrahlenkanal des Detektors abgebildet und lassen sich als Abweichungen erkennen. Die positionsabhängige Klassifikation bewertet die Abweichungen innerhalb der Ellipsoiden um Transmissionsänderungen bedingt durch die positionsabhängige Feststoffdicke auszugleichen.

### 2. Erkennung von Luftblasen in Gelkugeln

Während Luftblasen in transparenten Feststoffen wie z. B. kugelförmigen Kunststoffgranulaten unbedeutend sind, sind sie bei der Produktion von Gelkugeln mit eingelagerten Flüssigkeiten und Pulvern ein eindeutiger Hinweis auf einen Defekt der Gelkugeln, die deshalb aus dem Strom produzierter Artikel ausgeschleust werden müssen. Aus ästhetischen Gründen sind ggf. zudem die Glattheit der Oberfläche der Gelkugeln zu bestimmen und die Rundheit und der Durchmesser auszuwerten. Fremdpartikel können prozessbedingt nicht vorkommen und sind daher nicht auszuwerten.

Die Gelkugeln werden zunächst über einen Rüttler zugeführt. Auf dem Detektor ergeben sich regellos angeordnete Abbildungen der Gelkugeln. Die Abbildung einer idealen Gelkugel entspricht dem Elementarmuster. Die Gelkugeln variieren in Rundheit, Transparenz, Durchmesser usw. Es ergibt sich ein stochastisches Anordnungsschema und ein Elementarmuster mit stochastischen Variationen was als strukturell-statistischer Texturtyp bezeichnet wird.

Die Variationen der Gelkugeln werden auf Parameter des Elementarmusters abgebildet. Es ergeben sich Parameter für Durchmesser, Helligkeit, Rundheit usw. jedes Elementarmusters. Da kaum eine Korrelation zwischen den Positionen der einzelnen Elementarmustern besteht, entfällt die globale Parameterbestimmung und die Elementarmuster sind direkt zu lokalisieren. Der Rand der Gelkugeln weist eine verminderte Transmission auf, weshalb sich ein dunkler Rand im Retroreflexstrahlenkanal des Detektors ergibt. Im Auflicht sind evtl. keine Änderungen erkennbar. Das Elementarmuster entspricht somit einem dunklen Ring im Retroreflexstrahlenkanal, wobei unter Umständen keine Änderung im Auflicht vorliegt.

Da die Variation jeder Gelkugeln auszuwerten ist und die Gelkugeln regellos angeordnet sind, liegen keine auswertbaren globalen Parameter des Texturmodells vor und die Einzelmuster sind direkt anhand der Merkmale der Detektordaten zu lokalisieren.

Durch eine Segmentierung mit nachfolgender Blob Analyse können die Einzelmuster detektiert werden. Die Abweichungsdetektion erkennt Abweichungen innerhalb der Einzelmuster, welche im Anschluss klassifiziert werden.

Die Abbildungen von Luftblasen weisen ebenfalls einen dunklen Rand im Retroreflexstrahlenkanal auf, wodurch eine Abweichung detektierbar wird. Die positionsabhängige Klassifikation ist notwendig um die Abbildungen von Luftblasen im Rand der Einzelmuster zu erkennen. Die Glattheit wird ggf. anhand des Auflichtkanals zusätzlich ausgewertet.

### 3. Erkennung von Diamanten in quarzhaltigem Gestein

Bei dieser Anwendung sind Diamanten zu erkennen. Durch die Abweichungen des natürlichen Eingangsmaterials ergeben sich nicht vorhersagbare variierende Gesteinsdicken und Oberflächenrauhigkeiten. Die Gesteinslage sowie die Gesteinsform variieren stark, da die Detektorabbildung eines idealen Diamanten als Elementarmuster definiert werden kann ergibt sich trotz der stark variierenden Gesteinslage und Gesteinsform eine strukturell-statistische Textur.

Die Materialselektion zur Diamantenerkennung wird anhand des Transmissionsverhaltens im sichtbaren und UV-C Bereich realisiert. Die Transmissionswerte werden mittels Retroreflexstrahlengängen im sichtbaren und UV-C Bereich ermittelt. Das Transmissionsverhalten im sichtbaren und UV-C Bereich wird nicht nur von den Materialeigenschaften beeinflusst sondern auch von der nicht vorhersagbare Gesteinsform und Gesteinsrauhigkeit. Da sich diese Transmissionsänderungen durch Gesteinsform und Gesteinsrauhigkeit als identischer Faktor auf sichtbaren und UV-C Bereich auswirkt, lassen sich diese Effekte durch bildpunktbasierte Division der Transmission im UV-C Bereich zu Transmission im sichtbaren Spektralbereich eliminieren. Es ergibt sich als Merkmal aus den Detektordaten eine relative Transmissionsabbildung.

Anhand der relativen Transmissionsabbildung lassen sich über eine Segmentierung von Bereichen mit ähnlichen Werten die Einzelmuster lokalisieren. Da keine Defekte zu erkennen sind, ist keine Abweichungsdetektion notwendig und es kann direkt anhand der durchschnittlichen Transmission der Einzelmuster eine materialselektive Klassifizierung durchgeführt werden, um Diamanten zu erkennen.

### 4. Erkennung von eingeschlossen Partikeln in linsenförmigen Glasrohlingen

Ähnlich aber im Unterschied zu der unter 1 beschriebenen "Erkennung von Fremdpartikeln in transparenten Feststoffen" sind bei dieser Anwendung absorbierende Fremdpartikeln zu erkennen. Ebenso sind Luftblasen sowie Objektverformungen zulässig und dürfen daher nicht als Fehler erkannt werden. Zusätzlich sind bei dieser Anwendung die Fehlertoleranzen derart klein, dass bereits kleinste Staubpartikel auf dem Objekt zum Ausschleusen führen würden. Daher ist bei dieser Anwendung eine Unterscheidung zwischen eingeschlossen Partikeln und Oberflächenpartikel notwendig, wobei nur Objekte mit eingeschlossen Partikeln auszuschleusen sind.

Die Glasrohlinge werden als Objektkette in Fahrtrichtung am Inspektionssystem vorbeigeführt. Ein einzelner Glasrohling entspricht dem vorstehend beschriebenen Elementarmuster. Durch die Objektkette ergibt sich ein struktureller Texturtyp, d.h. Es treten keine stochastischen Variationen auf. Anhand des Randes der Glasrohlinge lassen sich die einzelnen Glasrohlinge segmentieren und mit dem Elementarmuster überlagern und Transmissionsänderungen bedingt durch die positionsabhängige Feststoffdicke ausgleichen.

Absorbierende Partikel werden im Gegensatz zu Luftblasen und Abweichungen auf der Objektoberfläche als dunkle Objekte im Auflichtkanal und im Retroreflexstrahlenkanal des Detektors abgebildet und lassen sich als Abweichungen erkennen. Durch Segmentierung der des Auflichtkanals und Retroreflexstrahlenkanals lassen sich zusammenhängende Segmente mit Abweichungen gewinnen. Überschneiden sich die Positionen der Segmente im Auflichtkanal und im Retroreflexstrahlenkanal liegt ein absorbierendes Partikel vor. Bei dem Partikel kann es sich nun aber auch um eine zulässige Verunreinigung (Staub) auf der Oberfläche handeln. Daher ist eine weitere Auswertekanal notwendig. Durch seitliche Beleuchtung unter flachem Einstrahlwinkel ergibt sich bei streuenden Oberflächen bzw. streuenden Partikeln auf der Oberfläche ein hoher Wert auf dem Detektor. Da die Oberfläche kaum zu einer Streuung führt, ergeben sich hohe Detektorwerte nur durch zulässige Oberflächenverunreinigungen. Durch Segmentierung dieses "Staubkanals" lassen sich Staubsegmente gewinnen. Nur Positionen für die im Auflichtkanal und im Retroreflexstrahlenkanal ein Segment und im "Staubkanal" kein Segment vorliegt sind somit als absorbierender Fremdpartikel zu klassifizieren und führen falls die Gesamtgröße aller Segmente mit dieser Eigenschaft für ein Objekt eine zulässige Schwelle überschreitet zu einer Ausschleusung des Objektes.

### Bezugszeichenliste

| | |
|---|---|
| 1 | Strom aus (teil-) transparenten Gütern |
| 2 | Förderrichtung |
| 3 | Satinierte Glasscheibe |
| 4 | Retroreflexfolie |
| 5 | Kameraeinheit |
| 6 | Beleuchtung für den Retroreflex-Strahlengang |
| 7 | Teildurchlässiger Spiegel |
| 8 | Optische Achse der Kamera |
| 9 | Auflichtbeleuchtung |
| 9A, 9B | Unterschiedliche Bereiche der Auflichtbeleuchtung |
| 6A | Weißlicht-Leuchtstoffröhre für den sichtbaren Spektralbereich |
| 6B | UV-C Leuchtstoffröhre |
| 11 | Matrixkamera für den sichtbaren Spektralbereich (VIS) |
| 12 | UV-C empfindliche Matrixkamera |
| 13 | Wellenlängenselektiver Strahlteiler |
| 14 | Klassifikator |
| 15 | Beleuchtungseinheit |

## Patentansprüche

1. Vorrichtung zur Klassifikation eines transparenten Bestandteils eines Materialstromes mit einer optischen Detektoreinrichtung, deren zuordenbare optische Achse auf den Materialstrom gerichtet ist, wenigstens einer Beleuchtungseinrichtung zur Beleuchtung des Materialstromes aus einem über dem Materialstrom aufgespannten Halbraum, in dem auch die optische Detektoreinrichtung enthalten ist, und einem Klassifikator, der auf der Grundlage von Informationen, welche mit der optischen Detektoreinrichtung von dem Bestandteil aufgenommen werden, sowie einem Entscheidungskriterium das Bestandteil klassifiziert,
**dadurch gekennzeichnet, dass** zumindest längs der optischen Achse der Detektoreinrichtung, in Detektorblickrichtung dem Materialstrom mittel- oder unmittelbar nachgeordnet ein Retroreflektor vorgesehen ist,
dass die Beleuchtungseinrichtung wenigstens zwei Lichtquellen vorsieht, von denen eine erste Lichtquelle Licht einer ersten und eine zweite Lichtquelle Licht einer zweiten Art emittiert,
dass das Licht wenigstens der ersten Lichtquelle längs zur optischen Achse auf den Materialstrom trifft,
dass die optische Detektoreinrichtung das Licht beider Lichtquellen selektiv zu detektieren vermag, und
dass das Licht der zweiten Lichtquelle in Form einer Auflichtquelle den Materialstrom beleuchtet, d.h. das Licht fällt flächig verteilt und nicht längs zur optischen Achse der Detektoreinrichtung auf den Materialstrom.

2. Vorrichtung zur Klassifikation eines transparenten Bestandteils eines Materialstromes mit einer optischen Detektoreinrichtung, deren zuordenbare optische Achse auf den Materialstrom gerichtet ist, wenigstens einer Beleuchtungseinrichtung zur Beleuchtung des Materialstromes aus einem über dem Materialstrom aufgespannten Halbraum, in dem auch die optische Detektoreinrichtung enthalten ist, und einem Klassifikator, der auf der Grundlage von Informationen, welche mit der optischen Detektoreinrichtung von dem Bestandteil aufgenommen werden, sowie einem Entscheidungskriterium das Bestandteil klassifiziert,
**dadurch gekennzeichnet, dass** zumindest längs der optischen Achse der Detektoreinrichtung, in Detektorblickrichtung dem Materialstrom mittel- oder unmittelbar nachgeordnet ein Retroreflektor vorgesehen ist,
dass die Beleuchtungseinrichtung wenigstens zwei Lichtquellen vorsieht, von denen eine erste Lichtquelle Licht einer ersten und eine zweite Lichtquelle Licht einer zweiten Art emittiert,
dass das Licht wenigstens der ersten Lichtquelle längs zur optischen Achse auf den Materialstrom trifft,
dass die optische Detektoreinrichtung das Licht beider Lichtquellen selektiv zu detektieren vermag, und
dass das Licht der zweiten Lichtquelle längs zur optischen Achse auf den Materialstrom trifft.

3. Vorrichtung nach Anspruch 1 oder 2,
**dadurch gekennzeichnet, dass** wenigstens eine weitere, eine dritte Lichtquelle vorgesehen ist, die den Materialstrom in Form einer Auflichtquelle beleuchtet, und dass das Licht der dritten Lichtquelle von einer dritten Art ist, das die optische Detektoreinheit selektiv zu detektieren vermag.

4. Vorrichtung nach einem der Ansprüche 1 bis 3,
**dadurch gekennzeichnet, dass** längs der optischen Achse der Detektoreinrichtung eine Einspiegelungsvorrichtung vorgesehen ist, zur Einspiegelung wenigstens des Lichtes der ersten Lichtquelle längs zur optischen Achse der Detektoreinrichtung.

5. Vorrichtung nach einem der Ansprüche 1 bis 4,
**dadurch gekennzeichnet, dass** sich das Licht der wenigstens ersten und zweiten Lichtquelle, wenigstens in einer der nachfolgende Eigenschaften voneinander unterscheidet; Wellenlänge, Polarisation, Modulation.

6. Vorrichtung nach einem der Ansprüche 1 bis 5,
**dadurch gekennzeichnet, dass** der Retroreflektor spektral selektiv oder polarisationsselektiv reflektiert.

7. Vorrichtung nach Anspruch 3,
**dadurch gekennzeichnet, dass** die zweite und dritte Lichtquelle den Materialstrom in Art einer Auflichtbeleuchtung aus unterschiedlichen Winkeln beleuchtet, und dass sich das aus den unterschiedliche Winkeln auf den Materialstrom auftreffende Licht in einer der nachfolgende Eigenschaften unterscheidet; Wellenlänge bzw. spektrale Zusammensetzung, Polarisation, Modulation.

8. Vorrichtung nach einem der Ansprüche 1 bis 7,
**dadurch gekennzeichnet, dass** die optische Detektoreinrichtung mehrere spektral empfindliche Empfangskanäle vorsieht mit jeweils unterschiedlicher Empfindlichkeit für unterschiedliche Spektralbereiche.

9. Vorrichtung nach den Ansprüchen 1 bis 8,
**dadurch gekennzeichnet, dass** zwischen dem Retroreflektor und dem Materialstrom eine Materialschicht angeordnet ist, die für einen ersten der benutzten Spektralbereiche transparent ist und bei Beleuchtung durch mindestens einen der zusätzlichen Spektralbereiche Licht im ersten Spektralbereich emittiert.

10. Vorrichtung nach den Ansprüchen 1 bis 9,
**dadurch gekennzeichnet, dass** zwischen dem Retroreflektor und dem Materialstrom eine Materialschicht angeordnet ist, die den Polarisationszustand der transmittierten Strahlung ändert.

11. Vorrichtung nach einem der Ansprüche 1 bis 10,
**dadurch gekennzeichnet, dass** eine der Lichtquellen den Materialstrom unter einem flachen Einstrahlwinkel beleuchtet, und
dass sich das Licht in wenigstens einer physikalischen Eigenschaft von jenem Licht unterscheidet, das von der oder den anderen Lichtquelle emittiert wird, so dass das Licht dieser Lichtquelle von der Detektoreinrichtung selektiv nachweisbar ist.

12. Verwendung der Vorrichtung nach den Ansprüchen 1 bis 11 zur Klassifikation und nachfolgenden Sortierung fehlerhafter Bestandteile aus einem aus transparenten Bestandteilen bestehenden Materialstrom.

13. Verfahren zur Klassifikation eines transparenten Bestandteils eines Materialstromes mit einer optischen Detektoreinrichtung, bei dem auf der Grundlage von mit der optischen Detektoreinrichtung von dem Bestandteil gewonnenen Informationen sowie einem Entscheidungskriterium das Bestandteil klassifiziert wird, unter Verwendung einer Vorrichtung nach einem der Ansprüche 1 bis 11, **gekennzeichnet durch** die Kombination folgender Verfahrensschritte:
- Vorgeben eines parametrisierbaren Texturmodells, das zumindest Informationen über geometrische und optische Eigenschaften des zu klassifizierenden Bestandteils umfasst,
- Extrahieren von Merkmalen aus den mit der optischen Detektoreinrichtung gewonnenen Informationen,
- Ermitteln der das Texturmodell bestimmenden Parameter auf der Grundlage der extrahierten Merkmale und Erzeugen eines zu dem zu klassifizierenden Bestandteil korrespondierenden Elementarmusters sowie eines räumlichen Anordnungsschemas für wenigstens das eine Elementarmuster,
- Lokalisieren jeweils eines dem zu klassifizierenden Bestandteil entsprechenden Einzelmusters aus den mit der optischen Detektoreinrichtung gewonnenen Informationen unter Zugrundelegung des Anordnungsschemas,
- Vergleichen des wenigstens einen Einzelmusters mit dem Elementarmuster und Festellen von Unterschieden,
- Klassifizieren jedes Einzelmusters auf der Grundlage der Unterschiede zum Elementarmuster.

14. Verfahren nach Anspruch 13,
**dadurch gekennzeichnet, dass** das parametrisierbare Texturmodell durch folgende Schritte gewonnen wird:
a) Erstellen eines Reinmodells auf der Grundlage von Form und optischen Eigenschaften des zu klassifizierenden Bestandteils,
b) Erstellen eines Szenenmodells des zu klassifizierenden Bestandteils unter Berücksichtigung des Reinmodells, eines das Reinmodell beeinflussenden Störungsmodells sowie von Eigenschaften der optischen Detektoreinrichtung und der Beleuchtungseinrichtung,
c) Erstellen des parametrisierbaren Texturmodells durch Prädiktion von mit der optischen Detektoreinrichtung zu gewinnenden Informationen auf der Grundlage des Szenenmodells.

15. Verfahren nach Anspruch 13 oder 14,
**dadurch gekennzeichnet, dass** im Anschluss an das Klassifizieren eine Aktion anschließt, die das klassifizierte Bestandteil auf Grundlage eines Entscheidungskriteriums beeinflusst.

## Claims

1. A device for the classification of a transparent component of a material flow with an optical detector device, the assignable optical axis whereof is directed onto the material flow, at least one illuminating device for illuminating the material flow from a half-space spanning over the material flow, said half-space also containing the optical detector device, and a classifier which classifies the component on the basis of information picked up from the component by the optical detector device as well as a decision-making criterion,
**characterised in that** a retro-reflector is provided at least along the optical axis of the detector device, disposed indirectly or directly downstream of the material flow in the detector viewing direction,
that the illuminating device provides at least two light sources, whereof a first light source emits light of a first kind and a second light source emits light of a second kind,
that the light of at least the first light source strikes the material flow longitudinally relative to the optical axis,
that the optical detector device is able to detect the light of both light sources selectively, and
that the light of the second light source illuminates the material flow in the form of an incident light source, i.e. the light falls onto the material flow distributed over an area and not longitudinally with respect to the optical axis of the detector device.

2. The device for the classification of a transparent component of a material flow with an optical detector device, the assignable optical axis whereof is directed onto the material flow, at least one illuminating device for illuminating the material flow from a half-space spanning over the material flow, said half-space also containing the optical detector device, and a classifier which classifies the component on the basis of information picked up from the component by the optical detector device as well as a decision-making criterion,
**characterised in that** a retro-reflector is provided at least along the optical axis of the detector device, disposed indirectly or directly downstream of the material flow in the detector viewing direction,
that the illuminating device provides at least two light sources, whereof a first light source emits light of a first kind and a second light source emits light of a second kind,
that the light of at least the first light source strikes the material flow longitudinally relative to the optical axis,
that the optical detector device is able to detect the light of both light sources selectively, and
that the light of the second light source strikes the material flow longitudinally with respect to the optical axis.

3. The device according to claim 1 or 2,
**characterised in that** at least one further, a third, light source is provided, which illuminates the material flow in the form of an incident light source, and that the light of the third light source is of a kind which the optical detector unit is able to detect selectively.

4. The device according to any one of claims 1 to 3,
**characterised in that** an inward-reflecting device is provided along the optical axis of the detector device for the inward reflection of at least the light of the first light source longitudinally with respect to the optical axis of the detector device.

5. The device according to any one of claims 1 to 4,
**characterised in that** the light of the at least first and second light source differ from one another at least in one of the following properties; wavelength, polarisation, modulation.

6. The device according to any one of claims 1 to 5,
**characterised in that** the retro-reflector reflects spectrally selectively or polarisation-selectively.

7. The device according to claim 3,
**characterised in that** the second and third light source illuminate the material flow from different angles in the manner of an incident-light illumination, and that the light striking the material flow from the different angles differs in one of the following properties; wavelength or spectral composition, polarisation, modulation.

8. The device according to any one of claims 1 to 7, **characterised in that** the optical detector device provides a plurality of spectrally sensitive reception channels with, in each case, different sensitivity for different spectral regions.

9. The device according to claims 1 to 8,
**characterised in that** a material layer is disposed between the retro-reflector and the material flow, said material layer being transparent for a first of the used spectral regions and emitting light in the first spectral region when illuminated by at least one of the additional spectral regions.

10. The device according to claims 1 to 9,
**characterised in that** a material layer is disposed between the retro-reflector and the material flow, said material layer changing the polarisation state of the transmitted radiation.

11. The device according to any one of claims 1 to 10,
**characterised in that** one of the light sources illuminates the material flow at a flat angle of incidence, and
that the light differs in at least one physical property from the light that is emitted from the other light source or sources, so that the light of said light source can be detected selectively by the detector device.

12. Use of the device according to claims 1 to 11 for the classification and subsequent sorting of defective components from a material flow comprising transparent components.

13. A method for the classification of a transparent component of a material flow with an optical detector device, wherein the component is classified on the basis of information obtained from the component by the optical detector device as well as a decision-making criterion, using a device according to any one of claims 1 to 11,
**characterised by** the combination of the following methods steps:
- selection of a parameterisable texture model, which comprises at least information concerning geometrical and optical properties of the component to be classified,
- extraction of features from the information obtained with the optical detector device,
- ascertainment of the parameters determining the texture model on the basis of the extracted features and generation of an elementary pattern corresponding to the component to be classified as well as a spatial arrangement diagram for at least the one elementary pattern,
- localisation of, in each case, an individual pattern corresponding to the component to be classified from the information obtained with the optical detector device on the basis of the arrangement diagram,
- comparison of the at least one individual pattern with the elementary pattern and ascertainment of differences,
- classification of each individual pattern on the basis of the differences with respect to the elementary pattern.

14. The method according to claim 13,
**characterised in that** the parameterisable texture model is obtained by the following steps:
a) creation of a pure model on the basis of the shape and optical properties of the component to be classified,
b) creation of a scenic model of the component to be classified taking account of the pure model, a disturbance model influencing the pure model as well as properties of the optical detector device and the illuminating device,
c) creation of a parameterisable texture model by prediction of information to be obtained with the optical detector device on the basis of the scenic model.

15. The method according to claim 13 or 14,
**characterised in that** an action follows the classification, said action influencing the classified component on the basis of a decision-making criterion.

## Revendications

1. Dispositif pour la classification d'un composant transparent d'un flux de matières, avec un système de détecteur optique, dont l'axe optique associable est dirigé vers le flux de matières, au moins un système d'éclairage pour éclairer le flux de matières à partir d'un espace semi-infini étendu au-dessus du flux de matières dans lequel est également contenu le système de détecteur optique et un classificateur, qui sur la base d'informations que le système de détecteur optique enregistre à partir du composant, ainsi que d'un critère de décision classifie le composant,
**caractérisé en ce qu'**au moins le long de l'axe optique du système de détecteur, en direction de vue du détecteur, il est prévu un rétro-réflecteur, monté indirectement ou directement en aval du flux de matière,
**en ce que** le système d'éclairage prévoit au moins deux sources lumineuses, dont une première source lumineuse émet de la lumière d'un premier type et une deuxième source lumineuse émet une lumière d'un deuxième type,
**en ce qu'**au moins la lumière de la première source lumineuse touche le flux de matières le long de l'axe optique,
**en ce que** le système de détecteur optique est susceptible de détecter de manière sélective la lumière des deux sources lumineuses et
**en ce que** la lumière de la deuxième source lumineuse éclaire le flux de matières sous la forme d'une source de lumière réfléchie, c'est-à-dire que la lumière est incidente sur le flux de matières en étant distribuée en nappe et non pas le long de l'axe optique du système de détecteur.

2. Dispositif pour la classification d'un composant transparent d'un flux de matières, avec un système de détecteur optique, dont l'axe optique associable est dirigé vers le flux de matières, au moins un système d'éclairage pour éclairer le flux de matières à partir d'un espace semi-infini étendu au-dessus du flux de matières dans lequel est également contenu le système de détecteur optique et un classificateur, qui sur la base d'informations que le système de détecteur optique enregistre à partir du composant, ainsi que d'un critère de décision classifie le composant,
**caractérisé en ce qu'**au moins le long de l'axe optique du système de détecteur, en direction de vue du détecteur, il est prévu un rétro-réflecteur, monté indirectement ou directement en aval du flux de matière,
**en ce que** le système d'éclairage prévoit au moins deux sources lumineuses, dont une première source lumineuse émet de la lumière d'un premier type et une deuxième source lumineuse émet une lumière d'un deuxième type,
**en ce qu'**au moins la lumière de la première source lumineuse touche le flux de matières le long de l'axe optique,
**en ce que** le système de détecteur optique est susceptible de détecter de manière sélective la lumière des deux sources lumineuses et
**en ce qu'**au moins la lumière de la deuxième source lumineuse touche le flux de matières le long de l'axe optique.

3. Dispositif selon la revendication 1 ou 2,
**caractérisé en ce qu'**il est prévu au moins une troisième source lumineuse supplémentaire qui éclaire le flux de matières sous la forme d'une source de lumière réfléchie et **en ce que** la lumière de la troisième source lumineuse est d'un troisième type, que l'unité de détecteur optique est susceptible de détecter de manière sélective.

4. Dispositif selon l'une quelconque des revendications 1 à 3,
**caractérisé en ce que** le long de l'axe optique du système de détecteur, il est prévu un dispositif de réflexion d'au moins la lumière de la première source lumineuse le long de l'axe optique du système de détecteur.

5. Dispositif selon l'une quelconque des revendications 1 à 4,
**caractérisé en ce que** la lumière de l'au moins première et deuxième source lumineuse se distingue l'une de l'autre par au moins l'une des caractéristiques suivantes : longueur d'onde, polarisation, modulation.

6. Dispositif selon l'une quelconque des revendications 1 à 5,
**caractérisé en ce que** le rétro-réflecteur réfléchit sélectivement de manière spectrale ou sélectivement par polarisation.

7. Dispositif selon la revendication 3,
**caractérisé en ce que** la deuxième et la troisième sources lumineuses éclairent le flux de matières à la manière d'un éclairage réfléchi à partir de différents angles et **en ce que** la lumière incidente sur le flux de matière à partir des différents angles se distingue par l'une des caractéristiques suivantes : longueur d'onde ou composition spectrale, polarisation, modulation.

8. Dispositif selon l'une quelconque des revendications 1 à 7,
**caractérisé en ce que** le système de détecteur optique prévoit plusieurs canaux de réception à sensibilité spectrale d'une sensibilité chaque fois différente pour différents domaines spectraux.

9. Dispositif selon les revendications 1 à 8,
**caractérisé en ce qu'**entre le rétro-réflecteur et le flux de matières est disposée une couche de matière qui est transparente pour un premier des domaines spectraux utilisés et qui lors de l'éclairage par au moins l'un des domaines spectraux supplémentaires émet de la lumière dans le premier domaine spectral.

10. Dispositif selon les revendications 1 à 9,
**caractérisé en ce qu'**entre le rétro-réflecteur et le flux de matières est disposée une couche de matière qui modifie l'état de polarisation du rayonnement transmis.

11. Dispositif selon l'une quelconque des revendications 1 à 10,
**caractérisé en ce que** l'une des sources lumineuses éclaire le flux de matières sous un angle d'incidence plat et
**en ce que** la lumière se distingue par au moins une caractéristique physique de la lumière qui est émise par la ou les autre(s) source(s) lumineuse(s), de sorte que la lumière de ladite source lumineuse puisse être détectée sélectivement par le système de détecteur.

12. Utilisation du dispositif selon les revendications 1 à 11 pour la classification et le tri consécutif de composants défectueux dans un flux de matière constitué de composants transparents.

13. Procédé de classification d'un composant transparent d'un flux de matières avec un système de détecteur optique, lors duquel sur la base d'informations acquises sur le composant par le système de détecteur optique, ainsi que d'un critère de décision, le composant est classifié, sous utilisation d'un dispositif selon l'une quelconque des revendications 1 à 11,
**caractérisé par** l'association des étapes de procédé suivantes :
- prédéfinition d'un spécimen de texture paramétrable qui comprend au moins des informations sur des caractéristiques géométriques et optiques du composant à classifier,
- extraction de propriétés des informations acquises à l'aide du système de détecteur optique,
- recherche de paramètres définissant le spécimen de texture sur la base des propriétés extraites et création d'un spécimen élémentaire correspondant au composant à classifier, ainsi que d'un schéma de disposition dans l'espace pour l'au moins un spécimen élémentaire,
- localisation de chaque fois un spécimen individuel correspondant au composant à classifier, à partir des informations acquises à l'aide du système de détecteur optique, en se basant sur le schéma de disposition,
- comparaison de l'au moins un spécimen individuel avec le spécimen élémentaire et constatation de différences,
- classification de chaque spécimen individuel sur la base des différences par rapport au spécimen élémentaire.

14. Procédé selon la revendication 13,
**caractérisé en ce qu'**on acquiert le spécimen de texture paramétrable via les étapes suivantes :
a) établissement d'un modèle élémentaire sur la base de caractéristiques de forme et d'optique du composant à classifier,
b) établissement d'un modèle de scène du composant à classifier sous considération du modèle élémentaire, d'un modèle de défaillance influençant le modèle élémentaire ainsi que de caractéristiques du système de détecteur optique et du système d'éclairage,
c) établissement du modèle de texture paramétrable par prédiction d'informations à acquérir à l'aide du système de détecteur optique sur la base du modèle de scène.

15. Procédé selon la revendication 13 ou 14,
**caractérisé en ce qu'**à la classification fait suite une action qui influence le composant classifié sur la base d'un critère de décision.
